# EUROPEAN PATENT SPECIFICATION

(11) **EP 2 388 546 B1**
(45) Date of publication and mention of the grant of the patent: **09.05.2012**
(21) Application number: 10163520.9
(22) Date of filing: 21.05.2010
(51) Int. Cl.: F28F 25/00, G10K 11/16

(54) **Floating device providing noise reduction properties**
Schwimmende Vorrichtung mit Rauschverringerungsseigenschaften
Dispositif flottant fournissant des propriétés de réduction du bruit

(43) Date of publication of application: 23.11.2011
(73) Proprietor: Armacell Enterprise GmbH, 48153 Münster (DE)
(72) Inventor: Quante, Heribert, 37696, Marienmünster (DE); Swift, Mark, Bradford, BD13 1PL (GB); Weidinger, Jürgen, 48167, Münster (DE)
(74) Representative: von Füner, Nicolai

(56) References cited:
- US-A- 3 081 987
- US-A- 3 977 492
- US-A- 5 462 331
- US-A- 5 684 278

## Description

The present invention relates to a floating noise reduction system for moving and/or falling fluids, the process for manufacturing of such system and the use of such system.

Falling or dropping and flowing fluid, especially water, is known to create significant noise that becomes a health and safety concern for work personnel and a nuisance for nearby residents. A prominent case is in cooling towers of power plants where costly measures have to be taken to reduce the noise. The conditions in cooling towers are among the worst for any sound dampening installation, as there is a permanent high water impact like from a waterfall moving round in circles. The resulting force can cause severe damage or at least accelerated fatigue to installations of any kind. Additionally, there has to be appropriate, i.e. highly efficient, drainage as any sound damping installation of course has to work above the water surface situation at the base of the tower. Thus, if a system can work under cooling tower conditions it is likely to work everywhere, e.g. also when applied on flowing fluids.

Some scope in sound attenuating systems has been put on cooling tower noise reduction for a.m. reasons. As the most widespread method, a noise protection wall around the base of the cooling tower is 1. costly and 2. only will reduce the noise emitted at ground level but not the noise escaping through the top opening, other measures had been examined. One approach consists in applying grid-like or mesh-like systems that should disperse the water flow and the noise, subsequently, such as in CN 200972335, CN 100533033, CN 2341088 and CN 2453381. The claimed noise reduction of 15-30 dB of the latter could not be reproduced during our examinations. Honeycombs as damping elements are mentioned in CN 2823955 and CN 1862206, but honeycombs or hollow systems in general are notorious for creating resonance sound, or "drumming", of course. All the a.m. systems are mainly based on metalwork and/or rigid plastics and thus do not possess material immanent dampening properties. To improve that situation, JP 8200986 claims the use of a combination of water permeable and non-permeable synthetic resin mats, however, also those materials are rather rigid and the drainage properties -despite the claimed drainage ridges- are poor, leading to water agglomeration on top of the mat which will increase the noise level again. CN 2169107 mentions damping mats and particles; however, the claimed system is not able to provide sufficient structural integrity for the application. Another approach is focussing on plate systems where the plates themselves are supported by a damping device and also disperse water, such as in CN 201003910, CN 201302391, CN 201302392, CN 201302393, CN 201184670, CN 1945190 (all describing combinations of rotating and fixed plates, partially combined with pipe systems), CN 201311202 (microporous plates), CN 2821500 (plates, rings and surface structures as known from acoustic indoor systems), JP 56049898 (complex metalwork with damping inlays). Other systems described in the literature are: CN 2447710 and CN 2438075 (use of floating balls) and CH 451216, DE 3009193, DE 1501391, DE 2508122, EP 1500891, SU 989292, WO 2007/134626. The latter documents, as well as a publication (M. Krus et al: Latest developments on noise reduction of industrial induced draft cooling towers, Veenendaal, 2001, pp 33-38) all mainly refer to systems consisting of floating devices which are supporting or carrying the damping system, consisting of mat-like structures, means, some elasticity or flexibility has been acknowledged to be beneficial for sound dampening; JP 58033621 at last mentions that "soft cover" may reduce falling water noise (for sluice doors). However, those systems are not consequently using the potential of elastic dampening and exhibit deficiencies in floating properties as well as in drainage performance; and some systems again are sensitive to mechanical impact.

A major object of the present invention thus is to provide a floating noise reduction system or material combination not showing the above mentioned deficiencies but exhibiting a significant and sustainable level of noise reduction over all concerned frequencies and showing an additional drainage effect and high mechanical wear resistance.

Surprisingly, it is found that such system or material not showing the above mentioned disadvantages can be made from a combination of expanded elastic material with a floating mechanical support made from expanded polymer.

In the accompanying drawings,
**Fig. 1** schematically illustrates the composition of claimed system,
**Fig. 2** schematically illustrates the skeleton (reticulated) structure,
**Fig. 3** schematically illustrates the damping of flowing or falling fluid or waves,
**Fig. 4** schematically illustrates the possible surface structures for drainage and absorption for layers (A) and (B),
**Fig. 5** schematically illustrates the test layout for falling water noise detection, and **Fig. 6** shows the frequencies being damped by claimed materials: 1/3 octave band spectra resulting from falling water test.

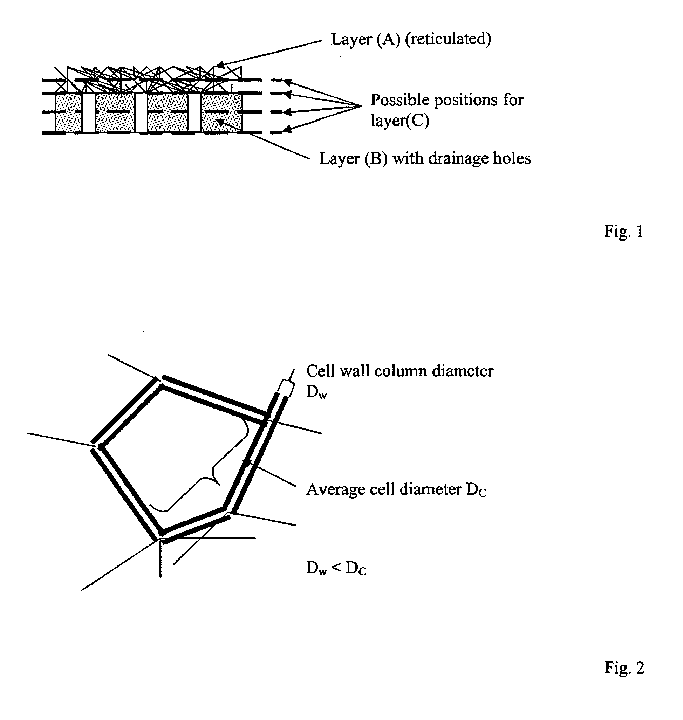

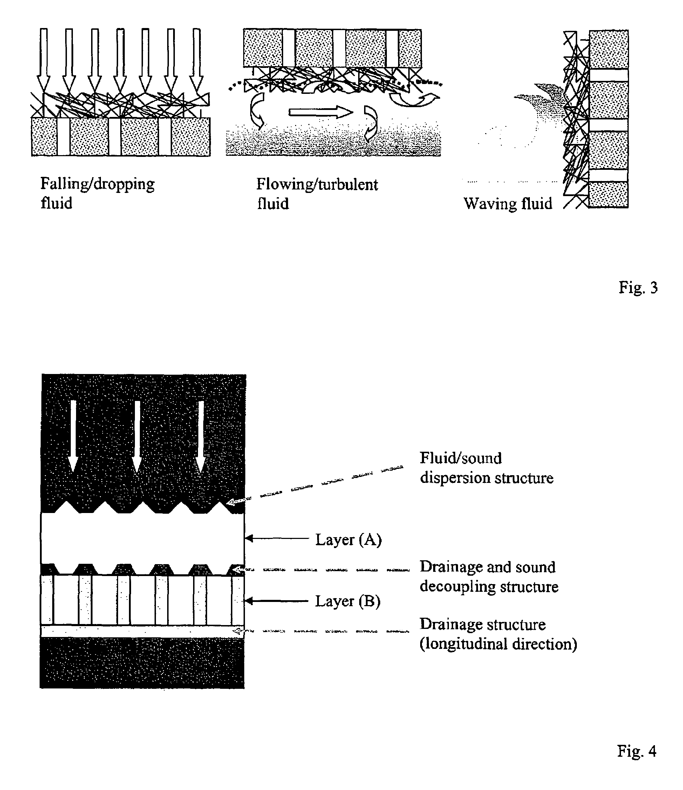

The claimed material comprises at least one layer (A) of expanded polymer based material with open cell (open porosity) structure (Fig. 1). The polymer based material of (A) can be expanded from an elastomer and/or thermoplastic elastomer (TPE) and/or thermoplastic and/or thermoset based polymer mixture, or combinations thereof, and can optionally be crosslinked to improve mechanical (e.g. compression set) and wear properties. Preferred are polymer based materials providing elasticity to (A), either by elastic properties provided by the polymer itself (e.g. for elastomers and TPEs) or by respectively thin, thus flexible expanded structures, or by a combination of both. The polymer based material is expanded by physical and/or chemical expansion agents to an open cell sponge or reticulated (skeleton) structure, depending on the required damping and drainage properties. Preferred is a reticulated (skeleton) structure where the polymer based cell walls are reduced to columns showing a diameter thinner than the average cell diameter (see Fig. 2). The polymer based material can be a mixture or compound that may contain fillers, such as oxides, carbonates, hydroxides, carbon blacks, recycled (ground) rubber, other recycled polymer materials, fibres etc., and additives, such as flame retardants, biocides, plasticizers, stabilizers, colours etc., of any kind in any ratio. The polymer base mixture may be crosslinked by any applicable mean of crosslinking, such as sulphur, peroxide, radiation, bisphenolics, metal oxides, polycondensation etc. (A) can show various densities, preferred are densities lower than typical fluids, e.g. lower than 700 kg/m³, to prevent sinking even when fully soaked. Especially preferred are densities lower than 300 kg/m³. It is easily feasible to use various combinations of polymer based compounds and various combinations of layers (A) made thereof. (A) will quickly absorb the falling or flowing fluid, disperse its impulse into smaller drops and in parallel will disperse the resulting impact energy transversally into the matrix of (A). This dispersion will continue through the open cell structure and into layer (B) and finally will lead to noise absorption within the claimed material and transmission of remaining noise into the fluid underneath when damping falling fluid, or into the medium above or outside when damping flowing fluid, or into a lateral medium when damping e.g. waves (see Fig. 3). Meanwhile the absorbed fluid itself will be silently drained through (A) and (B) to the fluid underneath or into the medium above or drained laterally. Layer (B) thus not only acts as floating and draining part of the system, but supports the noise reduction by interaction with (A) and by providing further potential for damping additional frequencies. (A) can be of flat surface to the falling fluid, or it can be structured to alter the absorption/dispersion properties, and it can be equipped with e.g. pin holes for better drainage. (A) can also be structured on its face to (B) for same reason, e.g. for drainage or sound decoupling purposes (see Fig. 4). Preferred materials for the manufacturing of (A) are elastomers, such as NR, IR, SBR, NBR, CR, IIR, EPM, EPDM, Q, etc., thermoplastic elastomers, such as TPP, TPV, TPU, SAN, SEBS etc., PIR/PUR or polyurethanes, especially reticulated polyurethanes, polyesters, phenolic and melamine based compounds.

The claimed system comprises at least one layer (B) of expanded polymer based material different or same as for (A) with either open or closed cell structure (Fig. 1). The polymer based material of (B) can be expanded from an elastomer and/or thermoplastic elastomer (TPE) and/or thermoplastic and/or thermoset based polymer mixture, or combinations thereof, and can optionally be crosslinked to improve mechanical (e.g. impact strength) and wear properties. Preferred are polymer based materials providing structural integrity to (B) to prevent breaking or warping of the system. The polymer based material is expanded by physical and/or chemical expansion agents to an open cell sponge or closed cell foam, depending on the required mechanical, damping and drainage properties. Preferred is a minimum 50% closed cell structure, especially preferred are at least 70% closed cells to prevent soaking and saturation with fluid. The polymer based material can be a mixture or compound that may contain fillers, such as oxides, carbonates, hydroxides, carbon blacks, recycled (ground) rubber, other recycled polymer materials, fibres etc., and additives, such as flame retardants, biocides, plasticizers, stabilizers, colours etc., of any kind in any ratio. The polymer base mixture may be crosslinked by any applicable mean of crosslinking, such as sulphur, peroxide, radiation, bisphenolics, metal oxides, polycondensation etc. (B) can show various densities, preferred are densities significantly lower than typical fluids, e.g. lower than 500 kg/m³, especially preferred are densities lower than 200 kg/m³. It is easily feasible to use various combinations of polymer based compounds and various combinations of layers (B) made thereof. (B) comprises a structure to ensure good drainage properties as (B) is responsible to draw the fluid away from (A) into the fluid underneath. This structure can comprise pin holes that can be applied in a wide variety of size and pattern and combinations. The structure can also comprise ridges of any shape in any combination (e.g. triangular, sinus-like, rectangular, trapezoidal etc.) that can be applied on one or both surfaces of (B) (see Fig. 4). (B) can be fixed to (A) by mechanical means, or chemically by bonding, or by a combination of both. Layers (A) and (B) -and optionally (C) - can be brought together directly by co-forming, e.g. by co-extrusion and/or co-moulding and/or lamination, and/or can be connected after giving shape to them. The connection can be achieved by adhesives, e.g. one or two part silicone, polyurethane, acrylate, chloroprene, contact adhesives or hot melts or any combination thereof. Or the connection can be achieved by direct melting or welding the two materials together, such as by UHF welding or the like. The preferred final form is a mat or tile like multilayer compound system. The tiles can easily be cut and shaped to fit any geometry of the fluid basin or fluid track to float on. Preferred materials for the manufacturing of (B) are elastomers, such as NR, IR, SBR, NBR, CR, IIR, EPM, EPDM, Q, etc., thermoplastic elastomers, such as TPP, TPV, TPU, SAN, SEBS etc., PIR/PUR or polyurethanes, polyesters, phenolic and melamine based compounds. Especially preferred are compounds providing high impact strength, such as polyalkylidene terephthalates.

The claimed material furthermore may comprise one or more additional layers (C) within and/or between layers (A) and/or (B) that may provide additional drainage and/or damping and/or other properties, such as preferably reinforcement, impact resistance etc. The layers (C) can e.g. comprise fibres, e.g. as mesh, or nonwoven, wire mesh, resin sheet etc. of any kind; see Fig. 1.

The claimed material furthermore may comprise a link system (D) that connects individual pieces, e.g. tiles, comprising layers (A), (B), and optionally (C) together, but still leaving room to move and float. (D) can comprise metalwork, woven bands, elastic links etc., or a combination thereof. (D) is fixed either into layer (B) / (C) -as the structurally toughest ones-or into the system, i.e. (B), from underneath or above or by a combination of both methods. Care has to be taken that (D) will not negatively influence the floating properties (weight) and the flexibility of the whole system. Cardan joints or axle bearing based links or other flexible linking methods are therefore preferred. An accordingly strong layer (C) between (A) and (B) can also take the part of (D) if the pieces of (A) and (B) are connected onto (C) keeping some distance between the respective tiles. However, a connection system (D) is preferred where individual tiles can be easily exchanged, e.g. for maintenance purposes.

It is a prominent advantage of the claimed material that it is providing excellent damping together with draining effect due to its composition and structure and that it additionally shows built-in anti-fatigue properties due to its composition, allowing long-term use even under harsh conditions.

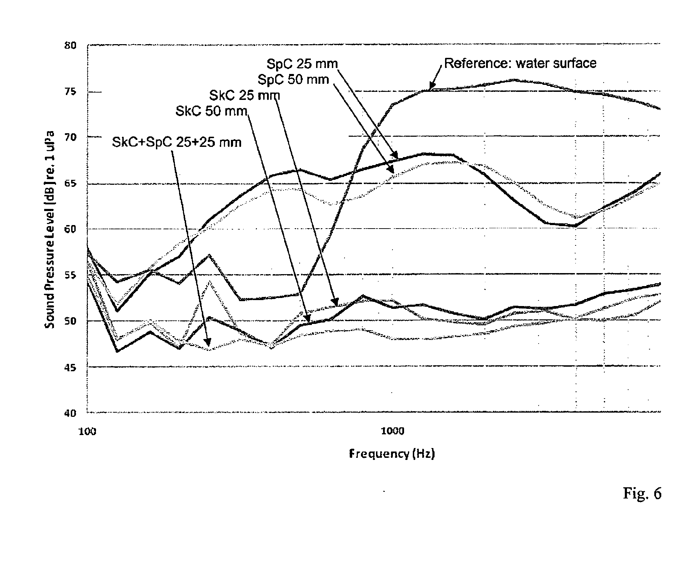

A further advantage of the claimed material is the possibility to adapt its properties to the desired property profile (concerning mechanics, damping/absorption, fluid intake, hydrophilic or hydrophobic character, porosity etc.) This can be achieved by modifying the expansion agent(s), the expansion process and the polymer base material composition, as well as the density, and, if required, the crosslinking system(s). The material thus can be altered to damp/absorb from high to low frequencies or frequency bands (see Fig. 6), and it can be used in contact with a broad variety of fluids, including aggressive and/or hot or cold ones.

Another basic advantage of the claimed material is the fact that its noise reduction properties are very constant over a wide temperature range leading to the fact that its performance remains unchanged no matter if it is used in summer or wintertime.

It is a further important advantage of the claimed material that it will reduce both the ground level noise as well as the top level noise at cooling towers (see table 1 and Fig. 6), rendering noise protection walls obsolete.

It is another important advantage of the claimed material that it can be applied for noise reduction both of falling/dropping and flowing fluids.

It is another advantage of the *claimed material that it is environmental friendly as it does not comprise or release harmful substances, does not affect water or soil or nature in general and as it is recyclable by separating the layers and then grinding or melting them individually.

A resulting advantage of the material is the fact that it can be blended or filled with or can contain scrapped or recycled material of the same kind to a very high extent not losing relevant properties significantly, which is especially the case for (B) and (C).

It is another advantage of the claimed material that its expanded structure provides insulation properties, thus, it can be beneficial for keeping fluids warm or cold in addition to the damping properties.

It is a prominent advantage of the claimed material that it can be produced in an economic way in automatic or semi-automatic shaping process, e.g. by moulding, extrusion and other shaping methods. It shows versatility in possibilities of manufacturing and application. It can be extruded, co-extruded, laminated, moulded, co-moulded etc. as single item or multilayer already and thus it can be applied in almost unrestricted form.

It is a further advantage of the claimed material that it can be transformed and given shape by standard methods being widespread in the industry and that it does not require specialized equipment.

It is another advantage of the claimed material for the application that it is long-lasting and durable, however, easy to change in case of maintenance and thus will reduce running costs for the user.

### Examples

### Preparation of test samples

1. Floating layer (B): an extruded, expanded and cut PET board of 25 mm thickness and 1000 x 1000 mm width (ArmaStruct®, Armacell, Münster, Germany) was coated with a silicone adhesive layer (ELASTOSIL® R plus 4700, Wacker Chemie, München, Germany) to give the floating part of the system. A sinus shape ridge structure (distance peak to peak of 35 mm) was applied to one surface by thermoforming embossing and pin holes of 20 mm diameter were drilled into the board in a distance of 80 mm.
2. Sponge like open cell absorbing layer (A): A rubber compound (Armaprene® NO, Armacell, Münster, Germany) was extruded, expanded and cut to an open cell foam mat of 25 mm thickness and 1000 x 1000 mm width and then laminated onto the plain surface of (B) as single or double layer by heating the composite up to 120 °C in a hot air oven, using the a.m. adhesive.
3. Skeleton structure open cell absorbing layer (A): A reticulated polyurethane foam mat of the type 80 poles per inch (SIF®, United Foam, Grand Rapids, U.S.A.) of 25 mm thickness and 1000 x 1000 mm width was laminated onto the plain surface of (B) as single or double layer by heating the composite up to 120 °C in a hot air oven, using the a.m. adhesive.

### Experimental Setup

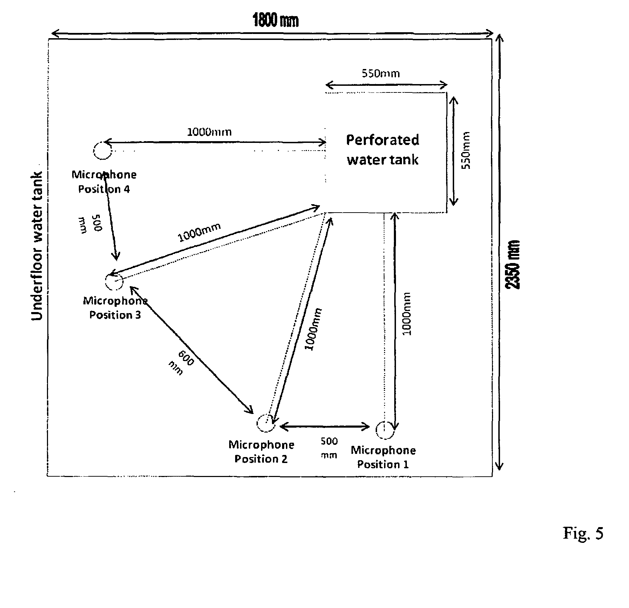

The experiments were carried out on test equipment proposed and developed by the Unversity of Bradford, UK (Prof. K. Horoshenkov). The setup (see Fig. 5) comprised of a large underfloor concrete water tank. The tank was 2.5 m deep, 1.8 m wide and 2.35 m long and was able to hold approximately 8 m³ of water. The water was discharged onto the underfloor tank from a perforated water tank mounted above. The perforated water tank was made of PVC and its dimensions were 0.55 m wide x 0.55 m long x 0.2 m deep. In order to simulate the discharge typical to that measured in a cooling tower the perforated water tank had 243 holes all 1mm diameter wide drilled in a 5 mm thick base, the spacing between the perforations was approximately 26 mm. The size of the perforations was chosen in accordance with the ISO 140, Part 18 (2006) and corresponds to that required to generate heavy rain. The perforated water tank was calibrated to deliver 5 m³/m²/hr discharge. This required a water supply at the rate of 20.8 litres per min. The calibration was carried out by using a standard flow meter and by weighing the amount of water discharged from the hose pipe over 15 sec intervals. It required the PVC water tank to be filled with 180 mm of water to achieve the equilibrium between the water pick-up and runoff.

The absorber foam samples (A) were tested in single and double layer configurations placed on top of the floating layer (B) by adhesion as described above. The distance between the top surface of the top foam layer and the bottom of the perforated water tank was kept 2 m in all the experiments to ensure the same terminal velocity of the water droplets. The following items of equipment were used for sound recording and analysis:
(i) one PC with WinMLS 2004 build 1.07E data acquisition and spectrum analysis software and 8-channel Marc-8 professional sound card.
(ii) four calibrated Bruel and Kjaer microphones, ½" type 4188.
(iii) one 4-channel B & K Nexus conditioning amplifier type-2693 set at 1V/Pa.

The audio channels were calibrated to 94 dB using a standard B&K microphone calibrator (Type 4230, no: 1670589). The 1/3-octave sound pressure level spectra were measured on the four channels and used to calculate the mean 1/3-otave level spectrum and the broadband sound pressure level (see Fig. 6). The lateral positions of the four microphones in the underfloor water tank are shown in Fig. 5. The microphones were suspended on cables 0.8 m below the bottom of the perforated water tank. The level of ambient noise in the laboratory was very low and signal to noise ratio of better than 20 dB was ensured throughout the tests.

### Results

Table 1 shows the good damping properties of already a standard sponge structure open cell material. The noise reduction effect even gets much better when very open cell ("skeleton structure") material is applied. Another incremental improvement can be found in a combination of both.

Table 1: Falling water test: noise reduction of open cell materials (A) -SpC=Sponge-like open cell structure; SkC=Skeleton-like open cell structure- in 25 and 50 mm thickness applied on a given layer of (B) in comparison with the unarmed water surface (all innovative examples).

| **Type of layer (A)** | **Avg. sound pressure level (dB)** | **Noise reduction by dB** |
|---|---|---|
| SpC foam 25 mm | 68.4 | 8.2 |
| SpC foam 50 mm | 67.6 | 9.0 |
| SkC foam 25 mm | 54.5 | 22.1 |
| SkC foam 50 mm | 54.5 | 22.1 |
| SkC + SpC (25+25 mm) | 52.6 | 24.0 |
| No damping | 76.6 | n.a. |

The frequencies being damped or absorbed also give an indication about the performance of the materials and material combinations. Fig. 6 shows the 1/3 octave band spectra for the materials of table 1 and proves that the skeleton like structure also has advantages in damping a broader range of frequencies (the sponge like structure tends to boom at low frequencies), however, it can be found, too, that a combination of both materials is performing slightly better.

## Claims

1. A system for noise reduction of moving fluids, including waves, comprising at least one open cell absorption layer (A) and at least one layer (B), wherein layer (B) is an absorption and a drainage layer, and wherein both layers, the open cell absorption layer (A) and layer (B) are obtained from expanded polymer based material showing a total average density of less than 1000 kg/m³, and wherein layer (B) contains at least 50% closed cells.

2. The system according to claim 1 wherein layer (B) contains at least 70% closed cells and shows a density of less than 700 kg/m³, preferably of less than 300 kg/m³.

3. The system according to one of claims 1-2 wherein the open cell layer (A) shows a density of less than 500 kg/m³, preferably less than 200 kg/m³.

4. The system according to one of claims 1-3 wherein the open cell layer (A) consists of reticulated foam.

5. The system according to claim 4 wherein the reticulated foam shows a cell structure of 10 to 300 pores per inch, preferably 20 to 120 pores per inch and wherein the polymer based material cell wall columns show a diameter thinner than the average cell diameter.

6. The system according to one of claims 1-4 wherein the layer (B) comprises polyolefin and/or polyalkylidene terephthalate.

7. The system according to one of claims 1-6 where drainage holes and/or ridge structures are applied in layer (B) and/or open cell layer (A).

8. A process for manufacturing the material according to one of claims 1-7 in a moulding and adhesion or continuous extrusion process and/or co-lamination, followed by applying the desired structures, respectively.

9. The use of a system according to one of claims 1-7 for applications requiring noise reduction of moving fluids, preferably for flowing and/or falling fluids or fluids creating waves, such as on channels and ponds, in cooling towers and at shores.

## Patentansprüche

1. System zur Geräuschreduzierung von Strömungsmedien, einschließlich Wellen, umfassend wenigstens eine offenzellige Absorptionsschicht (A) und wenigstens eine Schicht (B), wobei letztere eine Absorptions- und Entwässerungsschicht darstellt und beide Schichten, d.h. die offenzellige Absorptionsschicht (A) und die Schicht (B), erhalten wurden aus einem Material auf der Basis eines geschäumten Polymers mit einer Gesamtdurchschnittsdichte von unter 1000 kg/m³, wobei die Schicht (B) wenigstens 50 % geschlossene Zellen enthält.

2. System nach Anspruch 1, bei dem die Schicht (B) wenigstens 70 % geschlossene Zellen und eine Dichte von unter 700 kg/m³, vorzugsweise von unter 300 kg/m³, aufweist.

3. System nach einem der Ansprüche 1-2, bei dem die offenzellige Schicht (A) wenigstens eine Dichte von unter 500 kg/m³, vorzugsweise von unter 200 kg/m³, aufweist.

4. System nach einem der Ansprüche 1-3, bei dem die offenzellige Schicht (A) aus netzförmigem Schaum besteht.

5. System nach Anspruch 4, bei dem der netzförmige Schaum eine Zellstruktur von 10 - 300 Poren pro Zoll, vorzugsweise von 20 - 120 Poren pro Zoll, aufweist und die Zellwandsäulen aus einem Material auf Polymerbasis einen Durchmesser aufweisen, der unter dem durchschnittlichen Zelldurchmesser liegt.

6. System nach einem der Ansprüche 1-4, bei dem die Schicht (B) Polyolefin und/oder Polyalkylidenterephthalat umfasst.

7. System nach einem der Ansprüche 1-6, bei dem die Ablauföffnungen und/oder die Rillenstrukturen in der Schicht (B) und/oder in der offenzelligen Schicht (A) angeordnet sind.

8. Verfahren zur Herstellung eines Materials nach einem der Ansprüche 1-7 durch einen Prozess der Formung und Adhäsion bzw. kontinuierliche Extrusion und/oder Co-Lamination unter nachfolgender Aufbringung der gewünschten Strukturen.

9. Verwendung eines Systems nach einem der Ansprüche 1-7 für Zwecke der Geräuschreduzierung von Strömungsmedien, vorzugsweise von fließenden und/oder fallenden Flüssigkeiten oder wellenerzeugenden Flüssigkeiten wie in Kanälen und Teichen, in Kühltürmen und an Küsten.

## Revendications

1. Système de réduction du bruit des fluides en mouvement, y compris des ondes, comprenant au moins une couche d'absorption à cellules ouvertes (A) et au moins une couche (B), dans lequel la couche (B) est une couche d'absorption et de drainage, et dans lequel les deux couches, la couche d'absorption à cellules ouvertes (A) et la couche (B) sont obtenues à partir d'un matériau à base de polymère expansé présentant une densité moyenne totale inférieure à 1 000 kg/m³, et dans lequel la couche (B) contient au moins 50% de cellules fermées.

2. Système selon la revendication 1, dans lequel la couche (B) contient au moins 70% de cellules fermées et présente une densité inférieure à 700 kg/m³, de préférence inférieure à 300 kg/m³.

3. Système selon l'une quelconque des revendications 1 à 2, dans lequel la couche de cellules ouvertes (A) présente une densité inférieure à 500 kg/m³, de préférence inférieure à 200 kg/m³.

4. Système selon l'une quelconque des revendications 1 à 3, dans lequel la couche de cellules ouvertes (A) se compose de mousse réticulée.

5. Système selon la revendication 4, dans lequel la mousse réticulée présente une structure cellulaire de 10 à 300 pores par pouce, de préférence de 20 à 120 pores par pouce, et dans lequel les colonnes de parois des cellules de matériau à base de polymère présentent un diamètre plus mince que le diamètre moyen des cellules.

6. Système selon l'une quelconque des revendications 1 à 4, dans lequel la couche (B) comprend une polyoléfine et/ou un téréphtalate de polyalkylidène.

7. Système selon l'une quelconque des revendications 1 à 6 où des trous de drainage et/ou des structures de type crête sont appliqués dans la couche (B) et/ou la couche de cellules ouvertes (A).

8. Procédé de fabrication du matériau selon l'une quelconque des revendications 1 à 7 dans un procédé de moulage et adhésion ou extrusion continue et/ou un co-laminage, suivi de l'application des structures souhaitées, respectivement.

9. Utilisation d'un système selon l'une quelconque des revendications 1 à 7 pour des applications nécessitant une réduction du bruit de fluides en mouvement, de préférence pour l'écoulement et/ou la chute des fluides ou des fluides créant des ondes, tels que sur des canaux et des étangs, dans les tours de refroidissement et au niveau des côtes.
